# EUROPÄISCHE PATENTSCHRIFT

(11) **EP 2 017 584 B1**
(45) Veröffentlichungstag und Bekanntmachung des Hinweises auf die Patenterteilung: **10.02.2010**
(21) Anmeldenummer: 07012226.2
(22) Anmeldetag: 22.06.2007
(51) Int. Cl.: G01D 5/48, F15B 15/22, F15B 15/28

(54) **Fluidischer Zylinder mit einer Messvorrichtung zur Erfassung eines Parameters mittels einer Mikrowellen-Koppelsonde**
Fluid cylinder with measuring device for detecting a parameter using a microwave coupling probe
Vérin avec dispositif de mesure destiné à l'enregistrement d'un paramètre à l'aide d'une sonde de couplage à micro-ondes

(43) Veröffentlichungstag der Anmeldung: 21.01.2009
(73) Patentinhaber: FESTO AG & Co. KG, 73734 Esslingen (DE)
(72) Erfinder: Reininger, Thomas, 73249 Wernau (DE); Meier, Marcus, 70565 Stuttgart (DE); Geisbusch, Lothar, 73760 Ostfildern (DE)
(74) Vertreter: Vetter, Hans

(56) Entgegenhaltungen:
- DE-A1- 10 205 904
- US-A- 4 588 953
- US-A- 4 726 282
- ANONYMOUS: "Microwave piston position detection" RESEARCH DISCLOSURE, MASON PUBLICATIONS, HAMPSHIRE, GB, Bd. 279, Nr. 24, Juli 1987 (1987-07), XP007111721 ISSN: 0374-4353

## Beschreibung

Die Erfindung betrifft einen fluidischen Zylinder mit einer Messvorrichtung zur Erfassung eines Parameters, mit einer Mikrowellen-Koppelsonde in oder an einem Zylinderdeckel des Zylinders zur Einkopplung einer Hohlleiterwelle in den angrenzenden Zylinderraum und zur Auskopplung und Erfassung der vom Kolben reflektierten Hohlleiterwelle.

Aus der DE 102 05 904 A1 ist eine derartige Messvorrichtung bekannt, die zur Positionsbestimmung des Kolbens dient. Dies erfolgt über eine direkte oder indirekte Laufzeitmessung der abgesandten und reflektierten Hohlleiterwelle, insbesondere durch Erfassung der Phasenverschiebung.

Ein aus der US 4 726 282 A bekannter fluidischer Zylinder ist mit einer Endlagendämpfung und zwei Endschaltern ausgestattet. Hierzu ist in einem Zylinderdeckel ein zylindrischer Hohlraum zur Aufnahme eines mit dem Kolben verbundenen zylindrischen Endlagendämpfungsglieds angeordnet. Erreicht dieses Endlagendämpfungsglied den zylindrischen Hohlraum, so kann Fluid nicht mehr über diesen Hohlraum nach außen gelangen, da eine Ringdichtung an diesem zylindrischen Hohlraum eine entsprechende Abdichtung bewirkt. Das Fluid muss nun über einen meistens einstellbaren Bypasskanal gedrosselt nach außen gelangen. Diese Ringdichtung zur Abdichtung des in den zylindrischen Hohlraum eintretenden Endlagendämpfungsglieds ist üblicherweise in axialer Richtung beweglich gelagert, da die Endlagendämpfung zwar beim Einfahren des Endlagendämpfungsglieds in den zylindrischen Hohlraum wirksam sein soll, nicht dagegen beim Ausfahren. Diese Ringdichtung besitzt quasi die Funktion eines Rückschlagventils.

Wird nun der Zylinder mit einer Mikrowellen-Messvorrichtung versehen, so tritt ein Problem bezüglich der axialen Bewegung der Ringdichtung auf, die die Feldverteilung im Zylinder verändern würde und dadurch zu einer Messungenauigkeit führen würde, insbesondere bei einer Positionsmessung des Kolbens über eine Laufzeitmessung der Hohlleiterwelle. Diese Messungenauigkeit ist in vielen Fällen nicht akzeptabel.

Ein weiterer fluidischer Zylinder ist aus US 4 588 953 A bekannt.

Eine Aufgabe der vorliegenden Erfindung besteht darin, einen fluidischen Zylinder mit einer Messvorrichtung der eingangs genannten Gattung zu schaffen, bei der trotz axialer Bewegung der Ringdichtung der Endlagendämpfungsvorrichtung eine exakte Messung mittels einer Mikrowellen-Messvorrichtung möglich ist.

Diese Aufgabe wird erfindungsgemäß durch einen fluidischen Zylinder mit den Merkmalen des Anspruchs 1 gelöst.

Durch die erfindungsgemäße metallische Abschirmung der Ringdichtung der Endlagendämpfungsvorrichtung wird die Dichtung vom umgebenden elektromagnetischen Feld abgeschirmt. Eine Bewegung der Dichtung kann somit keinen Einfluss mehr auf die Verteilung des elektromagnetischen Feldes haben. Da die Abschirmung im Hinblick auf die erforderliche Dichtungswirkung nicht vollständig geschlossen sein kann, kann zwar im Innern keine völlige Feldfreiheit bewirkt werden, jedoch wird das Feld so geschwächt, dass ein wesentlicher Einfluss auf die Messgenauigkeit nicht mehr festgestellt werden kann. Für die Ausbreitung der Hohlleiterwelle hat die Abschirmung keine wesentlichen störenden Auswirkungen, da die Hohlleiterwelle den Abschnitt mit der abgeschirmten Ringdichtung ohne nennenswerte Reflektionen überwinden kann, insbesondere wenn der E01-Wellentyp (auch TM01-Mode genannt) zum Einsatz kommt. Dies hängt damit zusammen, dass sich eine E01-Welle im Hohlleiter sehr gut in eine koaxiale TEM-Welle umwandeln kann, wobei der Abschnitt mit der abgeschirmten Ringdichtung letztlich ein kurzes Stück Koaxialleitung darstellt. Aus diesem Grund kann das bekannte Konzept einer Mikrowellen-Messvorrichtung auch bei einem Zylinder mit pneumatischer Endlagendämpfung und axial bewegbarer Ringdichtung beibehalten werden, ohne dass die Messgenauigkeit in nennenswertem Maße verschlechtert wird.

Durch die in den Unteransprüchen aufgeführten Maßnahmen sind vorteilhafte Weiterbildungen und Verbesserungen des im Anspruch 1 angegebenen Zylinders möglich.

Der Zylinderdeckel besteht zweckmäßigerweise aus einem topfartigen metallischen Bereich, in dem der dielektrische, sich wenigstens bis zur Koppelsonde erstreckende Umgebungsbereich des Hohlraums angeordnet ist. Dieser dielektrische Umgebungsbereich besitzt entsprechend eine im Wesentlichen topfförmige Gestalt. Hierdurch kann sich die Hohlleiterwelle durch den dielektrischen Umgebungsbereich des zylindrischen Hohlraums für die Endlagendämpfung in für die Messung geeigneter Weise ausbreiten.

Die Kolbensonde ist bevorzugt konzentrisch und benachbart zum Bodenbereich des zylindrischen Hohlraums im dielektrischen Umgebungsbereich angeordnet, wobei prinzipiell auch eine andere Anordnung der Koppelsonde und der Antennenanordnung im dielektrischen Umgebungsbereich möglich wäre.

Eine Auswerteeinrichtung und ein Mikrowellengenerator, insbesondere in kombinierter Ausführung, ist bevorzugt in oder am Zylinderdeckel angeordnet, um eine kompakte Ausführung ohne aufwändige Mikrowellenzuleitungen zu erreichen.

Um den Aufschlag des Kolbens am dielektrischen Umgebungsbereich zu dämpfen, ist zweckmäßigerweise eine Dämpfungsscheibe an der dem Kolben zugewandten Stirnseite des dielektrischen Umgebungsbereichs und/oder an der gegenüber liegenden Stirnseite des Kolbens (12) angeordnet.

Die als ringförmige Abschirmhülse ausgebildete metallische Abschirmung besitzt zweckmäßigerweise einen U-förmigen oder halbkreisartigen Querschnitt, entsprechend der Querschnittsgestalt der Ringdichtung.

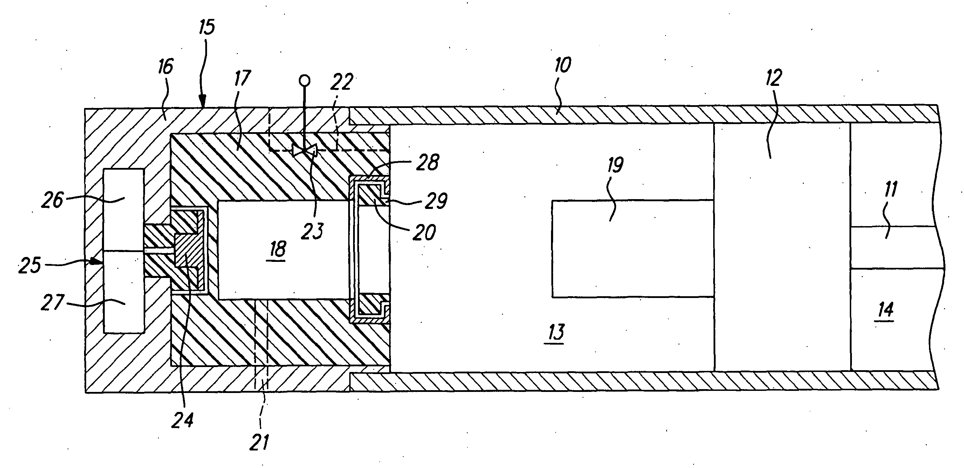

Ein Ausführungsbeispiel der Erfindung ist in der Zeichnung dargestellt und in der nachfolgenden Beschreibung näher erläutert. Die einzige Figur zeigt:
einen fluidischen Zylinder mit einer Endlagendämpfungsvorrichtung und einer Mikrowellen-Messvorrichtung im Längsschnitt.

Bei dem in der einzigen Figur dargestellten Ausführungsbeispiel ist ein fluidischer Zylinder 10 dargestellt, in dem ein mit einer Kolbenstange 11 versehener Kolben 12 verschiebbar geführt ist. Der Kolben 12 teilt den Innenraum des Zylinders 10 in zwei Zylinderkammern 13, 14 auf, wobei die fluidischen Zuleitungen zu den beiden Zylinderkammern 13, 14 und eine entsprechende fluidische Steuerung zur Vereinfachung nicht dargestellt sind. Der von der Kolbenstange 11 entfernte Endbereich des Zylinders 10 ist durch einen Zylinderdeckel 15 abgeschlossen. Auf Seiten der Kolbenstange 11 kann der Zylinder 10 ebenfalls durch einen nicht näher dargestellten Zylinderdeckel abgeschlossen sein, durch den die Kolbenstange 11 hindurchgeführt ist.

Der Zylinderdeckel 15 besteht aus einem metallischen, topfförmigen Außenbereich 16, in den ein ebenfalls topfförmiger Einsatz 17 aus einem dielektrischen Material, beispielsweise aus Kunststoff, eingesetzt ist. Dieser Einsatz 17 besitzt einen zylindrischen, konzentrischen, zum Kolben 12 hin offenen Hohlraum 18, der zur Aufnahme eines zylindrischen, als Endlagendämpfungsglied dienenden Pufferkolbens 19 dient, der am Kolben 12 fixiert ist. Der offene Mündungsbereich des Hohlraums 18 ist mit einer Ringdichtung 20 versehen, die zur Abdichtung des Spalts zwischen Pufferkolben 19 und Hohlraum 18 beim Einbringen des Pufferkolbens 19 in den Hohlraum 18 dient. Der Hohlraum 18 in Verbindung mit dem Pufferkolben 19 und der Ringdichtung 20 dient als Endlagendämpfungsvorrichtung für den Kolben 12. Bei einer Bewegung des Kolbens 12 gegen den Zylinderdeckel 15 kann das in der Zylinderkammer 13 enthaltene Fluid über einen den Hohlraum 18 mit der Außenseite des Zylinderdeckels 15 verbindenden Kanal 21 ausströmen. Der Kanal 21 kann dabei mit einem Anschluss zum Zuführen und Abführung von Fluid verbunden sein. Erreicht der Pufferkolben 19 die Ringdichtung 20, so kann das Fluid nicht mehr über den Kanal 21 ausströmen, sondern nur noch über eine Bypassleitung 22, die die Zylinderkammer 13 mit der Außenseite des Zylinderdeckels 15 verbindet, und in der ein einstellbares Drosselglied 23 angeordnet ist. Dabei kann bei einer einfacheren Ausführung auch ein nicht einstellbares Drosselglied vorgesehen sein oder die Bypassleitung 22 selbst dient in Folge ihres geringen Querschnitts als Drosselglied.

Die Ringdichtung 20 ist in axialer Richtung geringfügig verschiebbar, beispielsweise um ein 1mm. Hierdurch wirkt diese Ringdichtung 20 wie ein Rückschlagventil, da beim Einfahren des Pufferkolbens 19 in den Hohlraum 18 die Ringdichtung 20 gegen ihre axial innere Anlagefläche gedrückt und dadurch abgedichtet wird, während sie sich bei der Rückbewegung von dieser Fläche löst, so dass Fluid an der Ringdichtung 20 vorbei in die Zylinderkammer 13 einströmen kann.

Zur Einkopplung von Mikrowellen in die als Hohlleiter wirkende Zylinderkammer 13 dient eine Koppelsonde 24, die konzentrisch und benachbart zum Bodenbereich des Hohlraums 18 angeordnet ist. Sie ist mit einem im Zylinderdeckel 15 integrierten Mikrowellenmodul 25 verbunden, das einen Mikrowellengenerator 26 und eine Auswerteeinrichtung 27 enthält, wobei auch separate Einrichtungen möglich sind. Prinzipiell können der Mikrowellengenerator 26 und die Auswerteeinrichtung 27 auch außerhalb am Zylinderdeckel 15 oder von diesem entfernt angeordnet sein, wobei dann entsprechend geeignete Verbindungsleitungen erforderlich sind.

Die im Ausführungsbeispiel als Antenne angeordnete Koppelsonde 24 ist als konzentrischer Monopol mit Dachkapazität dargestellt und koppelt eine E01-Welle in den Zylinder 10 ein. Andere Ausführungen von Koppelsonden 24, die auch aus mehreren Einzelantennen bzw. Monopolen bestehen können, sind im Rahmen der Erfindung ebenfalls möglich, wobei auch unterschiedliche Hohlleitermoden erzeugt werden können.

Die Ringdichtung 20 wird von einer metallischen Abschirmhülse 28 umgriffen, die lediglich die radial nach innen weisenden Flächen der Ringdichtung 20 nicht abdecken kann, da diese die Abdichtung bewirken müssen. Im Ausführungsbeispiel weist die Ringdichtung 20 einen rechteckigen Querschnitt auf, so dass die Abschirmhülse 28 entsprechend einen rechteckförmigen U-Querschnitt besitzt, wobei das erforderliche axiale Bewegungsspiel gewährleistet sein muss. Der Querschnitt der Abschirmhülse 28 orientiert sich am Querschnitt der Ringdichtung 20, die auch einen runden Querschnitt oder sonstigen Querschnitt aufweisen kann. Die Abschirmhülse 28 ist im topfförmigen Einsatz 17 fixiert.

Das Mikrowellenmodul 25 dient in Verbindung mit der Koppelsonde 24 als Mikrowellen-Messvorrichtung zur Erfassung von Parametern im Zylinder 10, beispielsweise zur Erfassung der Kolbenposition, durch Laufzeitmessung der von der Koppelsonde 24 zum Kolben 12 und zurück laufenden Hohlleiterwelle, was beispielsweise durch Erfassung der Phasenverschiebung erfolgen kann. Andere Parameter können durch Abfrage von entsprechenden Sensoreinrichtungen durch die Hohlleiterwelle erfasst und in der Auswerteeinrichtung 27 ausgewertet werden.

Ohne die Abschirmhülse 28 würde die Bewegung der Ringdichtung 20 in axialer Richtung die Hohlleiterwelle bei der Messung beeinflussen, was zu Messfehlern führen würde. Durch die Abschirmhülse 18 wird eine Abschirmung erzielt, ohne dass störende Auswirkungen auf die Wellenausbreitung auftreten würde, d.h., die Hohlleiterwelle kann den Abschnitt mit der Abschirmhülse 18 und der Ringdichtung 20 ohne nennenswerte Reflektionen überwinden, so dass sich die Axialbewegung der Ringdichtung 20 nicht mehr störend auf den Messvorgang auswirkt.

Die Ringdichtung 20 besitzt einen ringförmigen, zum Kolben 12 hin gerichteten axialen Vorsprung 29, der axial über den topfförmigen Einsatz 17 übersteht und als Dichtlippe gegenüber dem Pufferkolben 19 sowie als Führungselement dient. Ein als Dämpfungsscheibe ausgebildetes, nicht dargestelltes Dämpfungsglied kann als Anschlagglied an der zum Kolben 12 hinweisenden Stirnseite des Einsatzes 17 und/oder an der gegenüber liegenden Stirnseite des Kolbens (12) angeordnet sein.

## Patentansprüche

1. Fluidischer Zylinder mit einer Messvorrichtung zur Erfassung eines Parameters, mit einer Mikrowellen-Koppelsonde (24) in oder an einem Zylinderdeckel (15) des Zylinders (10) zur Einkopplung einer Hohlleiterwelle in den angrenzenden Zylinderraum (13) und zur Auskopplung und Erfassung der vom Kolben (12) reflektierten Hohlleiterwelle, **dadurch gekennzeichnet, dass** der Zylinderdeckel (15) einen zylindrischen Hohlraum (18) zur Aufnahme eines mit dem Kolben (12) verbundenen zylindrischen Endlagendämpfungsglieds (19) besitzt, wobei eine zum fluidischen Zylinder gehörende Ringdichtung (20) zur Abdichtung zwischen dem Hohlraum (18) und dem Endlagendämpfungsglied (19) am offenen Endbereich des Hohlraums (18) angeordnet ist, und wobei die im dielektrischen Umgebungsbereich (17) des Hohlraums (18) angeordnete Ringdichtung (20) zumindest teilweise mit einer metallischen Abschirmung (28) versehen ist.

2. Zylinder nach Anspruch 1, **dadurch gekennzeichnet, dass** der Zylinderdeckel (15) aus einem topfartigen metallischen Außenbereich (16) besteht, in dem der dieelektrische, sich wenigstens bis zur Koppelsonde (24) erstreckende Umgebungsbereich (17) des Hohlraums (18) angeordnet ist.

3. Zylinder nach Anspruch 2, **dadurch gekennzeichnet, dass** der dielektrische Umgebungsbereich (17) eine im Wesentlichen topfförmige Gestalt besitzt.

4. Zylinder nach einem der vorhergehenden Ansprüche, **dadurch gekennzeichnet, dass** die Koppelsonde (24) konzentrisch und benachbart zum Bodenbereich des zylindrischen Hohlraums (18) im dielektrischen Umgebungsbereich (17) angeordnet ist.

5. Zylinder nach einem der vorhergehenden Ansprüche, **dadurch gekennzeichnet, dass** eine Auswerteeinrichtung (27) und ein Mikrowellengenerator (26), insbesondere in kombinierter Ausführung (25), im oder am Zylinderdeckel (15) angeordnet ist.

6. Zylinder nach einem der vorhergehenden Ansprüche, **dadurch gekennzeichnet, dass** eine Dämpfungsscheibe an der dem Kolben (12) zugewandten Stirnseite des dielektrischen Umgebungsbereichs (17) und/oder an der gegenüber liegenden Stirnseite des Kolbens (12) angeordnet ist.

7. Zylinder nach einem der vorhergehenden Ansprüche, **dadurch gekennzeichnet, dass** die als ringförmige Abschirmhülse ausgebildete metallische Abschirmung (28) einen U-förmigen oder halbkreisförmigen Querschnitt besitzt.

## Claims

1. Fluidic cylinder with a measuring device for detecting a parameter, with a microwave coupling probe (24) in or on a cylinder cover (15) of the cylinder (10) for coupling a guided wave into the adjoining cylinder chamber (13) and for coupling out and detecting the guided wave reflected by the piston (12), **characterised in that** the cylinder cover (15) has a cylindrical cavity (18) for accommodating a cylindrical cushioning element (19) joined to the piston (12), wherein a ring seal (20) which is part of the fluidic cylinder is located in the open end region of the cavity (18) to provide a seal between the cavity (18) and the cushioning element (19), and wherein the ring seal (20), which is located in the dielectric surrounding region (17) of the cavity (18), is at least partially provided with a metallic shielding (28).

2. Cylinder according to claim 1, **characterised in that** the cylinder cover (15) comprises a pot-like metallic outer region (16) in which the dielectric surrounding region (17) of the cavity (18), which extends at least as far as the coupling probe (24), is located.

3. Cylinder according to claim 2, **characterised in that** dielectric surrounding region (17) has a substantially pot-like shape.

4. Cylinder according to any of the preceding claims, **characterised in that** the coupling probe (24) is disposed concentric with and adjacent to the base region of the cylindrical cavity (18) in the dielectric surrounding region (17).

5. Cylinder according to any of the preceding claims, **characterised in that** an evaluation device (27) and a microwave generator (26) are provided in or on the cylinder cover, in particularly in a combined design (25).

6. Cylinder according to any of the preceding claims, **characterised in that** a damping disc is provided on the end face of the dielectric surrounding region (17) which is adjacent to the piston (12) and/or on the opposite end face of the piston (12).

7. Cylinder according to any of the preceding claims, **characterised in that** the metallic shielding (28), which is designed as an annular shielding sleeve, has a U-shaped or semicircular cross-section.

## Revendications

1. Vérin fluidique avec un dispositif de mesure destiné à enregistrer un paramètre, avec une sonde de couplage à micro-ondes (24) dans ou sur un couvercle (15) du vérin (10) pour injecter une onde d'un guide d'ondes dans la chambre (13) adjacente du vérin et pour éjecter et détecter l'onde du guide d'ondes réfléchie par le piston (12), **caractérisé en ce que** le couvercle (15) du vérin comporte une cavité (18) cylindrique destinée à recevoir un organe d'amortissement de fin de course (19) cylindrique, relié au piston (12), une garniture d'étanchéité annulaire (20), appartenant au vérin et destinée à assurer l'étanchéité entre la cavité (18) et l'organe d'amortissement de fin de course (19) étant disposée au niveau de la zone d'extrémité ouverte de la cavité (18), et la garniture d'étanchéité annulaire (20), disposée dans la zone enveloppante (17) diélectrique de la cavité (18), étant munie au moins partiellement d'un blindage (28) métallique.

2. Vérin selon la revendication 1, **caractérisé en ce que** le couvercle (15) du vérin est formé par une zone extérieure (16) métallique en forme de cuve, dans laquelle est disposée la zone enveloppante (17) diélectrique, s'étendant au moins jusqu'à la sonde de couplage (24), de la cavité (18).

3. Vérin selon la revendication 2, **caractérisé en ce que** la zone enveloppante (17) diélectrique a une forme sensiblement en forme de cuve.

4. Vérin selon l'une des revendications précédentes, **caractérisé en ce que** la sonde de couplage (24) est disposée concentriquement et de manière adjacente à la zone fond de la cavité (18) cylindrique, dans la zone enveloppante (17) diélectrique.

5. Vérin selon l'une quelconque des revendications précédentes, **caractérisé en ce qu'**un dispositif d'analyse (27) et un générateur de micro-ondes (26), en particulier dans un mode de réalisation (25) combiné, sont disposés dans ou sur le couvercle (15) du vérin.

6. Vérin selon l'une des revendications précédentes, **caractérisé en ce qu'**un disque d'amortissement est disposé sur la face frontale, orientée vers le piston (12), de la zone enveloppante (17) diélectrique et/ou sur la face frontale du piston (12), située en face.

7. Vérin selon l'une des revendications précédentes, **caractérisé en ce que** le blindage (28) métallique, réalisé sous la forme d'une gaine de blindage annulaire, a une section en forme de U ou en forme de demi-cercle.
